# EUROPEAN PATENT APPLICATION

(11) **EP 1 389 002 A1**
(43) Date of publication of application: **11.02.2004**
(21) Application number: 03077369.1
(22) Date of filing: 28.07.2003
(51) Int. Cl.: H04N 1/54

(54) **Method of rendering colours in a printing system**

(30) Priority: 05.08.2002 EP 02078402
(71) Applicant: Océ-Technologies B.V., 5914 CC Venlo (NL)
(72) Inventor: Boesten, Hubertus M.J.M., 6074 ES Melick (NL)
(74) Representative: van Meeteren, Arend Anthonie

(57) **Abstract**

Method of rendering colours in a printing system using a set of colorants, comprising, for each colour to be rendered, the selection of a subset of colorants and for each colorant of said subset, a halftone screen and a coverage fraction, characterised by the following steps:
- defining discrete colour points in at least a portion of a colour space,
- determining for the defined discrete colour points, different subsets of colorants and associated coverage fractions thereof, rendering each of said colour points, and calculating for each of said subsets an associated graininess value,
- determining lists of colorant subsets rendering the defined discrete colour points, said lists being consistent with respect to the attribution of a halftone screen to a colorant within a subset over said portion of the colour space, and
- selecting one of said lists of subsets of colorants on the basis of a total graininess calculated for said lists.

## Description

The invention relates to a method of rendering colours in a printing system using a set of colorants, comprising, for each colour to be rendered, the selection of a subset of colorants and for each colorant of said subset, a halftone screen and a coverage fraction.

According to the theory, any colour can be rendered on an image receiving support by combining two of the subtractive primary colours yellow (Y), magenta (M) and cyan (C). However, due to imperfections of the colorants used in printers, like ink or toner powder, the colour gamut that can be really achieved is reduced compared to the theoretical predictions, meaning that a part of the colour space can not be rendered in a satisfactory way. A possible solution is to use the colorant black (K) in a printing system in addition to the three subtractive primaries. In that case, including paper white (W), five colorants are available, and a given colour in the colour space can be rendered by several combinations of colorants. The freedom to choose between different combinations, characterised by the subset of chosen colorants with their respective coverage fraction, gives the possibility of extending the gamut that can be rendered, improving the quality of the printed colours and saving colorant, like ink or toner powder. A well-known method is Under Colour Removal (UCR). UCR is a separation technique where equivalent portions of cyan, magenta and yellow colorant are replaced by black colorant, mainly in the neutral parts and the shadows of an image. Hi-fi colour printers make usually use of more colorants than C, M, Y and K. For example a set with seven basic colorants C, M, Y, K, red (R), green (G) and blue (B) can be chosen. This set has the advantage that a very large colour gamut can be rendered in a satisfactory way.

ln colour printing, the illusion of continuous tones is achieved by superimposing binary halftone screens of the basic colorants. The resolution of the printed image depends on the spatial frequency of the halftone screens. To render a certain colour, a subset of colorant is used and a halftone screen is attributed to each of the colorants. A basic colorant has to be printed according to a certain area coverage fraction, which is controlled by filling the binary halftone screen accordingly.

As already described above, an arbitrary colour value can in general be built up by different subsets of colorants, as is the case when four colorants are available and a separation technique like UCR is used. When even more colorants are available, the number of possible combinations to render a given colour increases greatly. ln the case that eight colorants (C, M, Y, K, W, R, G, B) are available, and that four colorants are used to render a colour, an arbitrary colour in the print gamut can theoretically be built up by about seventy different subsets of colorant combinations. However, not every choice is possible and in reality the maximum number of primary colorant combinations is less. The freedom to choose any combination of colorants out of the set of available colorants, to which paper white is added, makes it possible to develop new colour-mixing strategies. These strategies are aimed at getting a higher quality of rendered colours for example with respect to graininess. Graininess is related to the uniformity of a rendered colour, meaning that it measures how uniformly the colorant (toner or ink powder) has been developed on paper. Graininess depends among others on the colour value reproduced and the way this colour is built up. Due to the fact that more than one colorant is used to render a given colour, some variations of the apparent colour will appear. The variations have different possible origins like non-uniformity in lightness of the used colorants or variations in the coverage of the colorants on the printing medium. Also the frequency of the halftone screen has an impact on graininess.

ln colour printing, the illusion of continuous tones is achieved by superimposing binary halftone screens of the basic colorants. ln the case of four colours printing, the effect of Moiré, being the result of interference patterns obtained when superimposing regular halftone screens, can be reduced if the chosen halftone screen angles are 0°, 15°, 45° and 75°. For printers using more than four colorants, special care has to be taken that the chosen halftoning method avoids the formation of Moiré effects. Preferably, not more than four different halftone screens are used. A solution to limit the number of halftone screens used in the printing process is to associate a halftone screen to a colorant for rendering a given colour, and, if necessary, to associate the same halftone screen to a different colorant for rendering a different colour. For example, if all subsets of colorants rendering colours in a part of the colour space contain one subtractive basis colorant, one additive basis colorant, K and W, a first halftone screen can be used for any of the subtractive basis colorants (C, M, Y), a second screen can be used for any of the additive basis colorants (R, G, B) while a fixed own halftone screen is attributed to each K and W. In printing process using complex colour-mixing method, the ability to choose from any combination of colorants out of the set of available colorants implies that the solution mentioned above is not always applicable. If a given colour has to be rendered with two subtractive primaries, a conflict would occur since the same halftone screen would be attributed to both colorants. Using more than four halftone screens is not an acceptable solution because of the Moiré problems. It is an object of the present invention to give a method for attributing a halftone screen to a colorant of set rendering a given colour. Here, it is important to note that a given colorant is not always associated to the same fixed halftone screen.

A colour-mixing strategy is known from European Patent Application EP 1014686 for improving the way of rendering light grey tones. Upon mixing two complementary colours such as R and C, it is expected that the texture will be less visible than upon printing black dots. Printing less black dots, which present a strong contrast with the white background of the white print medium, should reduce the graininess of an output print with grey tones. However, there, a fixed halftone screen is attributed to each available colorant which strongly limits the freedom to choose any subset of colorants to render a colour. The problem is solved by the present invention, in which the selection of a subset of colorants is characterised by the following steps:
- defining discrete colour points in at least a portion of a colour space,
- determining for the defined discrete colour points, different subsets of colorants and associated coverage fractions thereof, rendering each of said colour points, and calculating for each of said subsets an associated graininess value,
- determining lists of colorant subsets rendering the defined discrete colour points, said lists being consistent with respect to the attribution of a halftone screen to a colorant within a subset over said portion of the colour space,
   and
- selecting one of said lists of subsets of colorants on the basis of a total graininess calculated for said lists.

One of the benefits of the present invention is that the selection of colorants in the subsets of colorants rendering colours is not limited anymore by the fact that halftone screens are permanently attributed to colorants, and therefore the choice can be made on the basis of a total graininess calculated for the lists. An improvement of the print quality is obtained.
In one embodiment of the invention, a list of colorant subsets is consistent with respect to the attribution of a halftone screen to a colorant within a subset over said portion of the colour space if a halftone screen associated to a colorant in a subset rendering a first colour point is associated to the same said colorant, if present, in a subset rendering a neighbouring colour point of first said colour point. It is advantageous to attribute the same halftone screen to such colorants, because otherwise, the change of halftone screen would lead to strongly visible orientation changes, and to micro inequality.
In one other embodiment of the invention, a list of colorant subsets is consistent with respect to the attribution of a halftone screen to a colorant within a subset over said portion of the colour space if:
- a halftone screen associated to a colorant in a subset rendering a first colour point is associated to the same said colorant, if present, in a subset rendering a neighbouring colour point of first said colour point, and if,
- in the case that a same halftone screen is associated to a first colorant in a subset rendering a colour point and to a different second colorant rendering a neighbouring colour point of first said colour point, the coverage fractions of the first and second colorants are each less than a threshold coverage fraction x.

The benefit here is that the transition between different colorants to which the same halftone screen is attributed appears to be smooth. Due to mechanical uncertainties of developing units, unwanted shifts may occur between two different colorants with same halftone screen. This negative effect is reduced, because halftone screens taken over from one colorant to a different one have a limited area coverage fraction.
In one embodiment of the invention, the calculated total graininess for a list is a combination of the graininesses calculated for each discrete point colour point of the considered portion of the colour space. Depending on the value of the calculated total graininess, a choice can thus be made for the list of subsets of colorants rendering each individual colour in that part of the colour space.
In one embodiment of the invention, the selected list is the list showing the minimum calculated graininess. This ensures a very good visual aspect of the prints, because graininess is a property perceived by the human eye.

The invention will be explained hereinafter with reference to a printing system for printing toner powder images and having seven image recording media. However, the invention is not limited to a printing system with this method of image forming. Any image forming operation using a plurality of colorants and using halftone screens can be considered. The invention and its advantages will be explained in detail hereinafter with reference to the accompanying drawings in which:
Fig. 1 is a diagram of a printing system with seven image recording media for duplex printing of image receiving supports
Fig. 2 represents six colour portions in an a*b*-plane of the L*a*b* space (state of the art)
Fig. 3 shows a connection list in a part of the colour space with allowed connections and one forbidden connection.
Fig. 4 is an example of rendered graininess as a function of the toner coverage fraction for the given colorant Magenta.

Although it is theoretically possible to render any colour on an image receiving support by combining two subtractive primary colorants, in practice, the colour gamut that can be really covered is strongly reduced mainly due to the fact that colorants, like ink or toner powder, are not ideal. Hi-fi colour printers use more than three basis colorants in order to cover a larger colour gamut. ln order to render a given colour, a subset of colorants is chosen from an available set of basis colorants. Colours can be for example rendered by four colorants chosen from a set of eight available colorants (C, M, Y, R, G, B, K, and W). ln colour printing, an illusion of continuous tones is achieved by superimposing binary halftone screens of the basic colorants. ln the case of four colours printing, the effect of Moiré, being the result of interference patterns obtained when superimposing regular halftone screens, can be reduced if the chosen halftone screen angles are for example 0°, 15°, 45° and 75°. Basis colorants are thus printed next to or on top of each other and are further characterised by their coverage fraction, being the fraction of the spatial space covered by this colorant in the area where the given colour is rendered. In practice, the L*a*b* colour space is made discrete and look-up tables associate a subset of basis colorants, halftone screen and coverage fraction to each of the colour points in the rendered colour space.

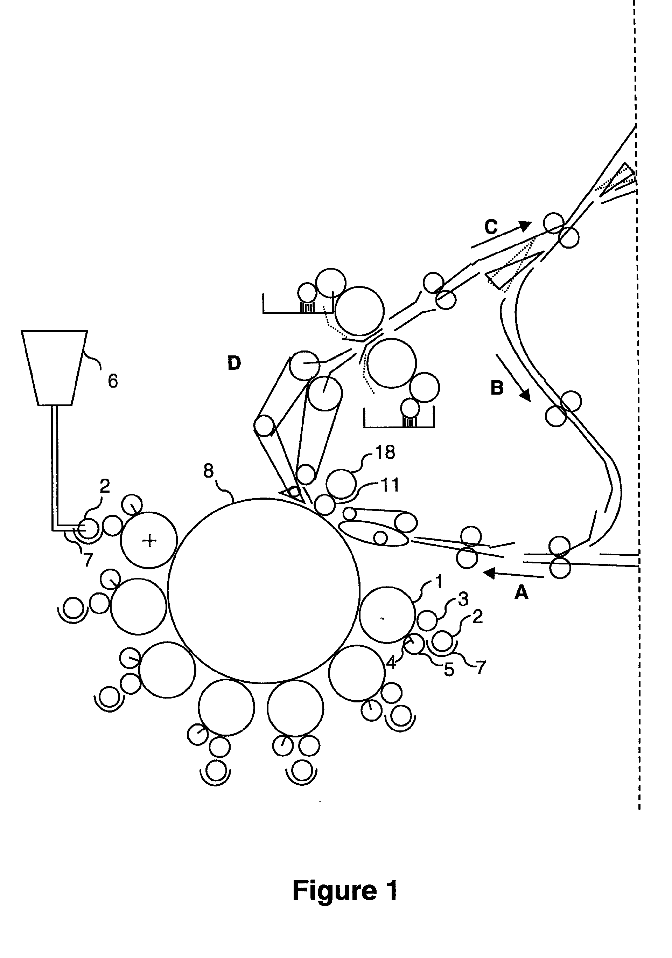

An example of a printing system for printing toner powder images and having seven image recording media is shown in Fig. 1. It shows a number of image recording media 1, on which toner powder images of a specific colour are developed. The toner colours are black, red, green, blue, cyan, magenta and yellow. The image recording medium 1 is in the form of a rotating cylinder having a dielectric surface layer thereon (not shown), with adjacent electrode tracks extending in the direction of rotation beneath said layer. A feed mill 2 and a magnetic feed roller 3 continuously deposit a full surface of electrically conductive and magnetically attractable toner powder on the image recording medium 1 as a result of a continuous voltage difference between the feed roller 3 and the electrodes of the image recording medium 1. The dielectric layer will be charged and the toner thus retained thereon for some time. Normally, this toner will be removed from the image recording medium 1 by a predominant magnetic force produced by a magnetic blade 4 disposed axially with respect to the rotating image recording medium 1. In these conditions a sleeve 5 rotating in the opposite direction with respect to the image recording medium 1 moves around the magnetic blade 4. If an extra voltage is now applied to an electrode, it is possible locally to retain toner on the image recording medium 1 at an intersection of the magnetic blade 4 and such an electrode under extra voltage, as a result of the locally and instantaneously predominating electric force. The toner is supplied from a toner powder supply reservoir 6 to a toner powder tray 7 disposed beneath the feed mill 2. The toner powder images formed on the separate image recording media 1 are then transferred in register to a rotatable central collecting member 8. This collecting member 8 is provided with a surface layer which retains toner powder better than the surface layer on the image forming members 1. By pressing the image recording media 1 against the collecting member with a specific contact pressure, the toner powder is then transferred by pressure transfer to the collecting member 8. The toner powder images collected on the collecting member 8 are finally transferred again by pressure transfer and a pressure roller 11 to an image receiving support, e. g. a sheet of paper, passing between said pressure roller 11 and the collecting member 8. The pressure roller 11 is cleaned by a cleaner 18. The direction A is the direction from which the image receiving support is supplied to the pressure roller 11. The direction B is the direction from which the image receiving support is supplied in the case of printing of a second side of an image receiving support. The direction C is the direction toward the discharge of image receiving supports. The part D of the printing system comprises transfer means and fixing means for fixing a transferred toner powder image on the image receiving support by means of pressure surfaces which are described in detail in EP 0821291A1.

Due to the relatively large number of colorants available in colour printers, a specific colour can be rendered by several different colorant subsets. The choice of subsets of colorants rendering colours in a part of the colour space is now explained. As an example, a printing system as shown in Fig. 1 is considered but any image forming operation using a plurality of colorants and halftone screens for rendering colours can be considered. In the example treated, each subset of colorants contains four colorants chosen from a set of eight available colorants (cyan, magenta, yellow, red, green, blue, black and white). Once the choice of subsets of colorants is made to render colours in a part of the colour space, the results can be stored in a look-up table, in which the coverage fraction and the halftone screen are associated to each colorant in a subset rendering a given colour.

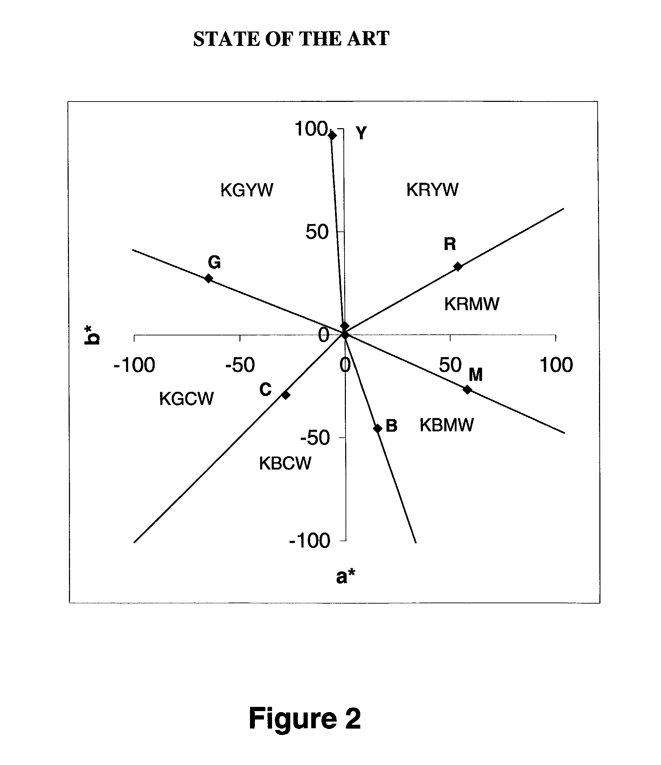

Graininess is a perceived feature of a rendered colour which is related to how uniformly the colorants (toner or ink powder) have been developed on paper. Graininess depends on the colorant itself, but also on the combination of colorants chosen to render a given colour. The choice of subsets of colorants rendering colours in a part of the colour space could be made uniquely as a function of graininess, so that individually, each rendered colour would be optimal with respect to this perceived feature. However if the choice was made uniquely on the basis of graininess, a shortcoming would appear, due to the fact that, for printers with eight colorants available, eight different halftone screens would be needed in the separation process, leading to a strong increase of observed Moiré effects. A possibility to achieve eight colour separation using only four halftone screens already exists. Fig. 2 represents, in an a*b*-plane of a part of the L*a*b* colour space, six colour portions, independent on the lightness value, represented by a vertical axe. The solid points represent the colorants in use. A colour of which the co-ordinates in the L*a*b* space are found within a portion is rendered with the subset of colorants corresponding to that portion. A colour is always rendered with a combination of black, white, an additive primary colorant (red, green or blue) and a subtractive primary colorant (cyan, magenta or yellow). The first halftone screen is attributed to black, the second screen systematically to an additive primary colorant, the third systematically to a subtractive colorant and the fourth to white. Halftone screen angles may be 0°, 15°, 45° and 75° for the first, second, third and fourth screens, respectively. The colorants within a portion are labelled in the order of the raster. For example, KRMW implies that the first halftone screen is assigned to black, the second to red, the third to magenta and the fourth to white. Moiré effects are minimised since only four halftone screens are used. At the transition from a colour portion to an other, the colorants that replace each other are attributed the same halftone screen and because they are not a predominant component in the transition area, the change is smooth and non-visible. A shortcoming to this solution is that a given colour has to be rendered with a pre-determined subset of colorants, which can result in a high value of graininess. In the following section, a method is described to achieve eight colour separation using only four halftone screens and at the same time, optimising with respect to graininess the choice of the colorants in the subset rendering a given colour.

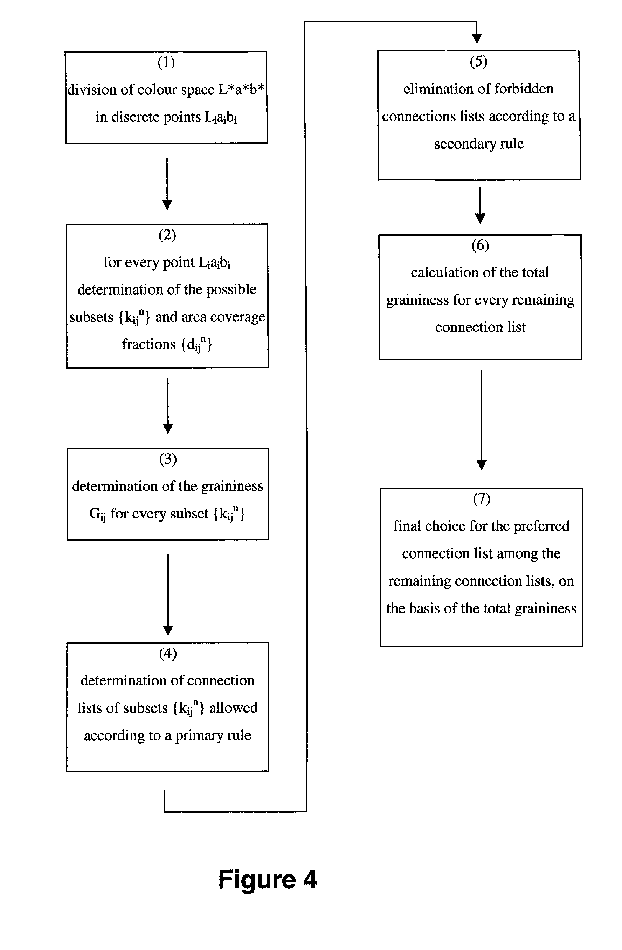

The method according to the invention is an algorithm that makes it possible to determine subsets of four colorants chosen from a set of eight basis colorants rendering a colour in a satisfying manner with respect to graininess, with four halftone screens to avoid Moiré effects. This method can also be used for selection of any number of colorants from a set of available colorants comprising any number of colorants. This method will now be explained with reference to Fig. 4.

As a first step, a part of the colour space L*a*b* is divided in discrete points Lᵢaᵢbᵢ according to a uniform grid. The choice of the L*a*b* colour space is advantageous because it is a perceptual linear space and differences between two neighbouring points directly relate with the apparent visual colour difference.

The second step consists in determining, for every point Lᵢaᵢbᵢ of the grid in a part of the colour space, the possible subsets {kᵢⱼⁿ) building up the colour and the associated area coverage fractions {dᵢⱼⁿ}. An algorithm from a known method or a look-up table is used. In this notation, i labels a given colour point of the discretised part of the colour space, j labels a possible combination of colorants rendering the colour of point i, k labels the colorant (C, M, Y, R, G, B, K or W) and n labels the halftone screen (n=1 for the first halftone screen, n=2 for the second, n=3 for the third, n=4 for the fourth).

The third step consists in applying an analytical model for the calculation of graininess. For every subset {kᵢⱼⁿ}, the graininess Gᵢⱼ is determined according to an analytical model, which takes into account the associated area coverage fractions {dᵢⱼⁿ}. The results are stored for example in a look-up table. An example of an analytical model is presented at the end of the description.

So far, for every point Lᵢaᵢbᵢ in a part of the colour space all possible subsets of colorants rendering the colour of the point have been established and the graininess associated to each subset calculated. For each point, a choice has to be made for the optimal subset and a halftone screen has to be associated to each colorant. This choice can actually not be made independently for each colour point, because otherwise there would be incoherence between neighbouring subsets {kᵢⱼⁿ}. An example of incoherence is that a given colorant present in subsets of neighbouring points in the colour space would be attributed different halftone screens. The change of halftone screen leads to strongly visible orientation changes, and to micro inequality, especially when toner coverages are high.

The fourth step consists in establishing so-called connection lists of subsets {kᵢⱼⁿ) allowed in that part of the colour space. It indicates for every point Lᵢaᵢbᵢ in the colour space, which subsets {kᵢⱼⁿ} are consistent with the subsets rendering the six neighbouring points in the discretised colour space. This is done according to a primary connecting rule illustrated below being that the same halftone screen is attributed to a colorant present in both subsets rendering two closest neighbouring colour points.

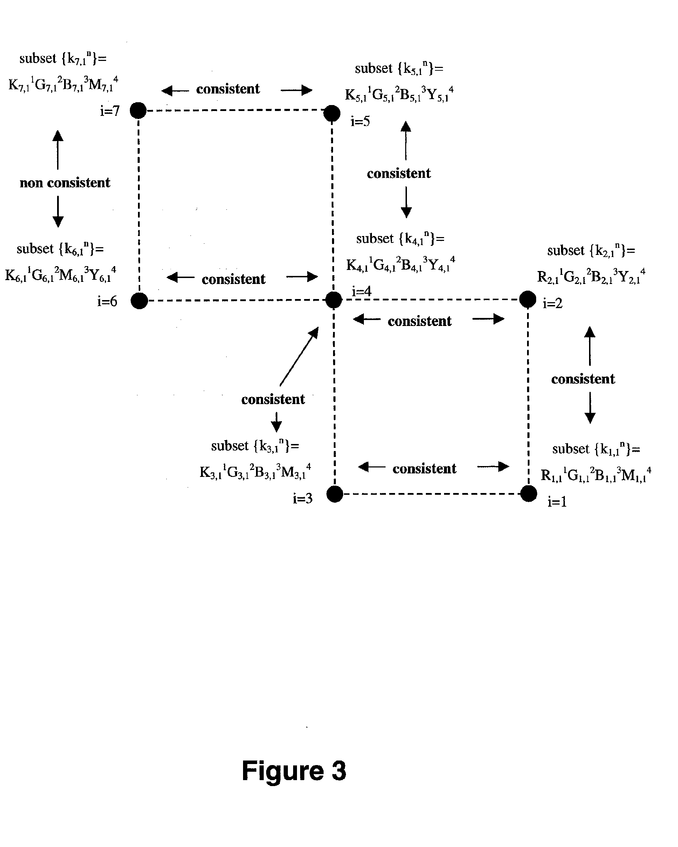

ln Fig. 3, for each of the colours labelled from i=1 to i=8, one possible subset rendering the colour is shown. To apply the primary connecting rule, the area coverage fraction does not have to be taken into account. In each case, the shown subset is the first possible subset rendering each of the colours and therefore labelled by j=1. Colour point 4 has as closest neighbours points 2, 3, 5 and 6 in that part of the colour space, points 1 and 3 are closest neighbours of each other, points 5 and 7 as well and so on. It has now to be checked whether the subsets of that list are consistent with each other. The following primary rule has to be fulfilled: the same halftone screen is attributed to a colorant present in both subsets rendering two closest neighbouring colour points. It is seen in Fig. 3 that the subset K_{4,1}¹G_{4,1}²B_{4,1}³Y_{4,1}⁴ for colour 4 is consistent with the subset R_{2,1}¹G_{2,1}²B_{2,1}³Y_{2,1}⁴ for point 2, because secondary, third and fourth halftone screens are in both subsets respectively attributed to the same colorants G, B, Y. The subset K_{4,1}¹G_{4,1}² B_{4,1}³Y_{4,1}⁴ is also consistent with subsets K_{3,1}¹G_{3,1} ²B_{3,1} ³M_{3,1}⁴(point 3), K_{5,1}¹ G_{5,1}² B_{5,1}³ Y_{5,1}⁴ (point 5, happening to be the same subset as K_{4,1}¹G_{4,1}²B_{4,1}³Y_{4,1}⁴), and K_{6,1}¹B_{6,1}²M_{6,1}³_{Y6,1}⁴ (point 6), as can be easily verified. Furthermore, subset {k_{1,1}ⁿ} is consistent with subsets {k_{2,1}ⁿ} and {k_{3,1}ⁿ}. Further, subset {k_{5,1}ⁿ} is consistent with subset {k_{7,1}ⁿ} as well. However, it appears that subset {k_{6,1}ⁿ} is not consistent with subset {k_{7,1}ⁿ} because there colorant M gets the third halftone screen in subset {k_{6,1}ⁿ} while it gets the fourth screen in subset {k_{7,1}ⁿ}. There is a conflict between both these sets, meaning that they are not consistent with each other. A possible solution is to search for another subset {k_{6,j}ⁿ} that would be consistent with its closest neighbours.

After the fourth step has been finalised, all possible lists of points that are connected with each other throughout the considered part of the colour space according to the primary rule are thus determined.

The fifth step consists in applying a secondary rule to colorants which are present in a subset rendering colour points and not in a subset rendering a neighbouring colour point. Since the number of halftone screens available is limited, a common halftone screen has to be shared by different colorants. For every subset, a halftone screen has to be associated to each colorant. A problem in prints is the way two different colorants are connected when the same halftone screen is attributed to these colorants. Ideally, this transition needs to be very smooth and without any registration error between the colorants used. Due to mechanical uncertainties of developing units, unwanted shifts may occur between two different colorants with same halftone screen. Therefore, to limit this effect, halftone screens taken over from one colorant to a different one need to have a limited area coverage fraction. In the considered part of the colour space, this problem may arise between two neighbouring colours. The subset of colorants might be different, and a given halftone screen is attributed to two different basic colorants. ln order to minimise that registration errors become too much visible, the following secondary rule is applied to decide whether two subsets rendering two neighbouring colours in that part of the colour space are connected: if the coverage fraction of one of the colorants of subset rendering a colour is less than a chosen threshold value x, then the halftone screen of this colorant may be taken over by a different colorant in subset rendering neighbouring colour, at the condition that it also has a coverage fraction smaller than x. If it is impossible to connect two subsets rendering two neighbouring colours in that part of the colour space according to the secondary rule, this connection is forbidden. It has been seen in Fig. 3 that the subset K_{4,1}¹G_{4,1}²B_{4,1}³Y_{4,1}⁴ for point 4 is consistent with the subset R_{2,1}¹G_{2,1} ²B_{2,1}³Y_{2,1}⁴ for point 2 according to the primary rule. A possible threshold value for the coverage fraction is x=16%. In this case, if the coverage fraction for K in the subset rendering point 4 is 8% and the coverage fraction for R in the subset rendering point 2 is 5%, then the connection is allowed according to the secondary connection rule, because both coverage fractions are smaller than the threshold value x. However, if the coverage fraction for R in the subset rendering point 2 is 26% the connection is forbidden, because the said coverage fraction is larger than the threshold value.

The sixth step consists in calculating the total graininess for every connection list. The total graininess is a combination of the individual graininesses corresponding to the subsets of a connection list in a part of the colour space. The combination may be a weighted sum of the individual graininesses.

The seventh step consists in making a final choice for the preferred connection list among the remaining connection lists. The choice is made on the basis of the total graininess, which already has been established for each connection list. The optimum list can be chosen such that the minimum total graininess is achieved.

### A model for the graininess calculation

Because graininess is an apparent feature, actually related to the way that the human eye perceives the printed colour, an objective method is needed to express graininess as a quantitative value. Therefore, a mathematical model is required that predicts the graininess of an arbitrary amount of colorants mixed on a white image receiving support in arbitrary fractions. A model predicting the graininess for single colorants as a function of the area coverage function is presented. The Y-component (in the CIE XYZ colour space) for a colour mixing of a single colorant with paper white can be translated into a value for the colorant coverage fraction d. The fraction d obeys the following equation: d=(Y-Y_{w})/(Yₖ-Y_{w}), where Yₖ is the Y-value of the basis colorant k and Y_{w} is the Y-value of paper white. From experiments, it has been seen that the graininess can be described by two second-order polynomials, the first applying for area coverage fraction d between 0 and 0.25, and the second applying for d values between 0.25 and 1. To determine these second-order polynomials, boundary conditions have to be formulated. Theoretically, the graininess of a plane covered entirely with a single colorant should be zero. This gives one boundary condition for the second-order polynomial applying for d between 0 and 0.25 and one boundary condition for the second-order polynomial applying for d between 0.25 and 1. An other boundary condition is that the maximum value of graininess is reached for d=0.25. Experiments have shown that this maximum value of the graininess can be analytically modelled. The maximum value of the graininess G (0.25) for all colorants is given by the following equation: G (0.25)=Aₖ(|L_{w}-Lₖ |+|c_{w}-cₖ|/5), where L_{w} is the lightness value of paper white, Lₖ is the lightness value of the colorant k, c_{w} is the chroma of paper white and cₖ is the chroma of colorant k (in the CIE L*C*h colour space). For the printing apparatus taken as an example in Fig. 1, Aₖ is a factor taking the value A=0.3834 for all toner primaries, except for black where it takes the value A_{K}=0.3334. These second order polynomials can be applied for all graininess curves of the seven toner primaries. They are totally determined taking the boundary conditions discussed above into account and which are summarised as follows:
- G (0)=0 for the second-order polynomial for d between 0 and 0.25
- G (1)=0 for the second-order polynomial for d between 0.25 and 1
- G (0.25), the maximum value of the graininess for both polynomials is given by: G (0.25)=Ak(|LW-Lk|+|cw-ck|/5); consequently, the derivative with respect to area coverage fraction d is 0 for d=0.25 for both second order polynomial G (d) curves

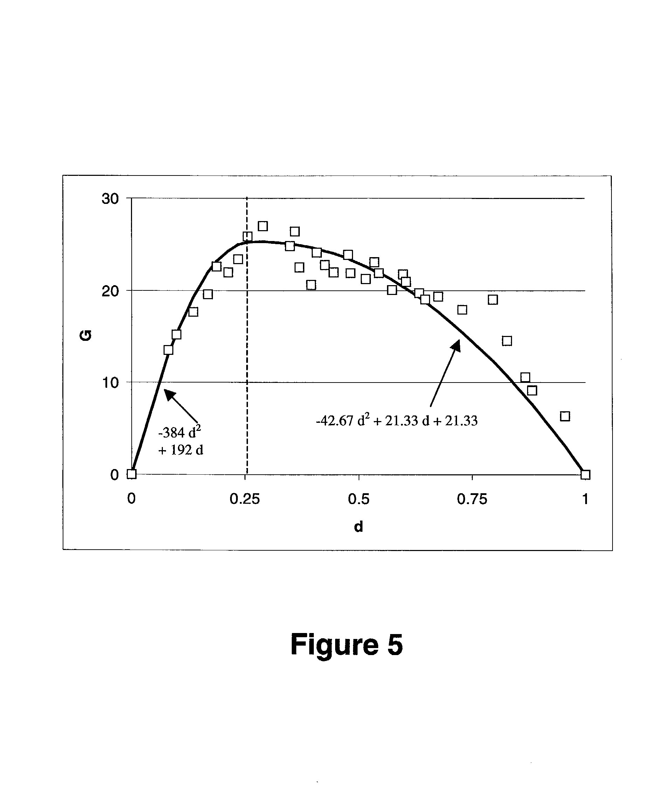

With three boundary conditions for each of both second-order polynomials, the polynomials are determined in a unique way. The analytical model described above is able to predict the graininess as a function of a given area coverage fraction d for the mixture of a single colorant with paper white. In Fig. 5 the variation of graininess G is shown as an example as a function of the area coverage fraction d for the toner magenta used in the printing apparatus shown in Fig. 1. The squares are experimental points obtained by a scanner while the full lines represent the two second-order polynomials from the analytical model explained above.
For the purpose of this invention, it is needed to predict the graininess for a mixture of an arbitrary number of colorants in a subset rendering a colour. The concept of partial graininess is introduced. It is the graininess associated with a single colorant within a subset of colorant rendering a given colour. The partial graininess depends on the intrinsic characteristics of the colorant, like lightness and chroma, on the area coverage fraction and on the background colour, being the colour rendered by the other colorants inside the subset. The graininess value of a mixture of for example four colorants k (k=1, 2, 3, 4) is predicted according to the following method:
1) the four basis colorants k are sorted by ascending lightness value
2) for colorant k, the lightness L_{back} and chroma _{cback} of the colour rendered by the three other basis colorants, i.e. the 'background' colour is determined. Then, the mixture of the colorant k with the uniform 'background' colour C_{back} is considered.
3) the (partial) graininess curve Gₖ (dₖ) for the colorant k, where dₖ is the coverage area fraction of colorant k is modelled analytically by taking into account the following rules, which are similar these holding for the mixture of a single colorant with paper white, with the difference that the background mixture replaces paper white:
   - Gₖ (0)=0 for the second-order polynomial for d between 0 and 0.25
   - Gₖ (1)=0 for the second-order polynomial for d between 0.25 and 1
   - Gₖ (0.25), the maximum value of the graininess for both polynomials is given by: Gₖ (0.25)=Aₖ(|L_{back}-Lₖ|+|c_{back}-cₖ|/5); consequently, the derivative with respect to area coverage fraction d is 0 for d=0.25 for both second order polynomial Gₖ (d) curves
4) steps 2 and 3 are repeated for k=2 and k=3. Note that the fourth colour (k=4) always fills the 'holes' left by the first three colorants and thus develops perfectly. The influence of this colorant on graininess is accounted for in the other three partial graininesses, in terms of lightness difference with the background colour.
5) The three partial graininesses Gₖ (dₖ) for k=1, 2, 3 are added.

## Claims

1. Method of rendering colours in a printing system using a set of colorants, comprising, for each colour to be rendered, the selection of a subset of colorants and for each colorant of said subset, a halftone screen and a coverage fraction, **characterised by** the following steps:
- defining discrete colour points in at least a portion of a colour space,
- determining for the defined discrete colour points, different subsets of colorants and associated coverage fractions thereof, rendering each of said colour points, and calculating for each of said subsets an associated graininess value,
- determining lists of colorant subsets rendering the defined discrete colour points, said lists being consistent with respect to the attribution of a halftone screen to a colorant within a subset over said portion of the colour space,
and
- selecting one of said lists of subsets of colorants on the basis of a total graininess calculated for said lists.

2. Method of rendering colours according to claim 1, **characterised in that** a list of colorant subsets is consistent with respect to the attribution of a halftone screen to a colorant within a subset over said portion of the colour space if
a halftone screen associated to a colorant in a subset rendering a first colour point is associated to the same said colorant, if present, in a subset rendering a neighbouring colour point of first said colour point.

3. Method of rendering colours according to claim 1, **characterised in that** a list of colorant subsets is consistent with respect to the attribution of a halftone screen to a colorant within a subset over said portion of the colour space if
- a halftone screen associated to a colorant in a subset rendering a first colour point is associated to the same said colorant, if present, in a subset rendering a neighbouring colour point of first said colour point, and if,
- in the case that a same halftone screen is associated to a first colorant in a subset rendering a colour point and to a different second colorant rendering a neighbouring colour point of first said colour point,
the coverage fractions of the first and second colorants are each less than a threshold coverage fraction x.

4. Method of rendering colours according to any one of the preceding claims, **characterised in that** the calculated total graininess for a list is a combination of the graininesses calculated for each discrete point colour point of the considered portion of the colour space.

5. Method of rendering colours according to claim 4, **characterised in that** the calculated total graininess for a list is a weighted sum of the graininesses calculated for each discrete point colour point of the considered portion of the colour space.

6. Method of rendering colours according to claim 4 or 5, **characterised in that** the calculated graininess for each discrete colour point of the considered portion of the colour space is a combination of the partial graininesses of each colorant in the subset of colorants rendering said discrete colour point.

7. Method of rendering colours according to claim 6, **characterised in that** the calculated graininess for each discrete colour point of the considered portion of the colour space is a weighted sum of the partial graininesses of each colorant in the subset of colorants rendering said discrete colour point.

8. Method of rendering colours according to any one of the preceding claims, **characterised in that** the selected list is the list showing the minimum calculated graininess.

9. Method of rendering colours according to claim 6 or 7, **characterised in that** the calculated graininess for a list of colorant subsets rendering the defined discrete colour points is obtained by a mathematical model in which the partial graininess for a colorant in a subset rendering a colour point is a function of the coverage fraction of said colorant.

10. Printing system rendering colours using, for the selection of the subsets of colorants rendering said colours, and of the halftone screens associated to said colorants in the subset, a method according to any one of the preceding claims.

11. Printing system according to claim 10 comprising a memory unit wherein a list of subsets of colorants rendering the colour points, the halftone screens associated thereto and coverage fraction of the said colorants are stored in a look-up table.
